Europäisches Patentamt

European Patent Office

Office européen des brevets

(19)

(11) Veröffentlichungsnummer: **0 026 447**
**A2**

(12) **EUROPÄISCHE PATENTANMELDUNG**

(21) Anmeldenummer: **80105740.7**

(22) Anmeldetag: **24.09.80**

(51) Int. Cl.³: **B 60 B 23/10**

(30) Priorität: **28.09.79 CH 8743/79**

(43) Veröffentlichungstag der Anmeldung:
**08.04.81 Patentblatt 81/14**

(84) Benannte Vertragsstaaten:
**DE FR IT NL SE**

(71) Anmelder: **GEORG FISCHER AKTIENGESELLSCHAFT**
**Mühlentalstrasse 105**
**CH-8201 Schaffhausen(CH)**

(72) Erfinder: **Kempf, Helmut**
**Weinsteig 205**
**CH-8200 Schaffhausen(CH)**

(72) Erfinder: **Baumann, Kurt**
**Oberstieg 33**
**CH-8222 Beringen(CH)**

(54) **Fahrzeugrad mit Klemmplatten zur Felgenbefestigung an einem Radkörper.**

(57) Das beschriebene Fahrzeugrad mit Klemmplatten (3) zur Befestigung einer Felge (2) an einen Radkörper (1) weist einen länglichen, an den Klemmplatten (3) ausgebildeten Vorsprung (7) auf, der in eine entsprechend geformte Ausnehmung (8) im Radkörper (1) eingreift. Im Radialschnitt verlaufen die Umrisse des Vorsprungs (7) und der Ausnehmung (8) etwa teilkreisförmig, wobei der Radius des Vorsprungs (7) ein wenig kleiner als derjenige der Ausnehmung (8) ist.

Diese Befestigung ist gegenüber der bestehenden Ausführung leichter zu montieren, dauerhafter, weist eine grössere gemeinsame Berührungsfläche auf und verhindert eine Fehlmontage.

EP 0 026 447 A2

./...

Fig. 1

GEORG FISCHER AKTIENGESELLSCHAFT, 8201 Schaffhausen

2124/FzT / 15.8.1980 / LG-bs /

Fahrzeugrad mit Klemmplatten zur Felgenbefestigung
an einem Radkörper

Die Erfindung betrifft ein Fahrzeugrad mit Klemmplatten zur Felgenbefestigung an einem Radkörper, wobei jede Klemmplatte etwa
in der Mitte ein Loch zur Aufnahme einer vom Radkörper gehaltenen Schraube aufweist, auf die eine Mutter auf der Radaussenseite,
zum Andrücken der Klemmplatte gegen den Radkörper und die Felge,
aufgeschraubt ist, und die Klemmplatte mit einem ersten gegen die
Felge anliegenden Vorsprung und einem zweiten, in eine Ausnehmung
im Radkörper eingreifenden Vorsprung versehen ist.

Insbesondere Fahrzeugräder für hohe Belastungen bestehen oft
aus einem Radkörper, z.B. einem Radstern oder einem Radkranz, der
sich bis zur Felge erstreckt, die am Umfang des Radkörpers festgeschraubt wird. Für diese Befestigung werden normalerweise
Klemmplatten verwendet, die gegen den Felgenfuss anliegen und in
eine Ausnehmung im Radkörper eingreifen.

Bisher wurden Klemmplatten mit einem zapfenförmigen Vorsprung
verwendet, der in eine kreisrunde Ausnehmung des Radkörpers eingreift. Wenn derartige Klemmplatten sorgfältig montiert sind,
geben sie keinen Anlass zu Beanstandungen.

Bei unsorgfältiger Montage kann es aber vorkommen, dass der zapfenförmige, kreisrunde Vorsprung nicht richtig in die Ausnehmung
eingreift. Damit die Montage erleichtert wird, ist ein Spiel
zwischen dem Vorsprung und der Ausnehmung vorgesehen, so dass die
Berührung zwischen ihnen praktisch längs einer etwa parallel
zur Radachse verlaufenden Linie erfolgt.

Die Herstellung der bestehenden Ausnehmung stellt ferner relativ
hohe Ansprüche an die Genauigkeit und ist deshalb zeitraubend
und kostspielig.

Wegen der praktisch kurzen linearen Berührung ist die Gefahr
einer Abnutzung der Ausnehmung relativ gross, so dass die Ausnehmung allein aus diesem Grunde unbrauchbar wird.

Infolge der erforderlichen Genauigkeit ist ausserdem die Gefahr
von Ausschuss relativ gross.

Aufgabe der Erfindung ist es somit ein Fahrzeugrad mit Klemmplatten zur Felgenbefestigung am Radkörper derart auszubilden, dass
die Nachteile bestehender Ausführungen vermieden werden.

Die zu schaffende Ausführung soll eine feste Halterung der Felgen
gewährleisten und eine einfache, schnelle, dauerhafte und sichere
Montage der Felgen auch dann sicherstellen, wenn die Montage ausserhalb eines Garagebetriebes durchgeführt wird.

Ferner soll die zu schaffende Ausführung über einen längeren
Zeitraum dadurch weniger einer Abnutzung ausgesetzt sein, dass
die aneinander anliegenden Flächen der Ausnehmung und der Klemmplatte möglichst gross bemessen sind.

Die neue Ausführung soll zudem beim Giessen des Radkörpers derart genau herstellbar sein, dass eine Nachbearbeitung nicht erforderlich ist.

Diese Aufgabe ist mit der Lehre gemäss dem gekennzeichneten Teil des Anspruches 1 gelöst.

Ausführungsformen dieser Lehre sind in den weiteren, abhängigen
Ansprüchen umschrieben.

Mit der beschriebenen Ausführung ist eine sichere und dauerhafte
Befestigung zwischen dem Radkörper und den Felgen geschaffen
worden, die einfach und preisgünstig herstellbar ist.

Gegenüber der bestehenden Ausführung hat die geschaffene Lösung
zudem den Vorteil, dass sie eine fehlerhafte Montage ausserhalb
eines Garagebetriebs praktisch verhindert.

Die geschaffene Lösung ist einfacher und preisgünstiger herstellbar als bekannte Ausführungen.

Nachfolgend wird ein Ausführungsbeispiel des Gegenstandes der Erfindung anhand der Zeichnung näher erläutert. Es zeigen:

Fig. 1   einen Axialschnitt durch einen Teil eines Radkörpers mit
         einer daran befestigten Felge,

Fig. 2   eine Ansicht der Klemmplatte nach Fig. 1 von der Radaussenseite,

Fig. 3   einen Schnitt längs der Linie III-III in Fig. 2,

Fig. 4   einen Schnitt längs der Linie IV-IV in Fig. 2, und

Fig. 5   eine Ansicht des Radkörperteils nach Fig. 1, von der
         Radaussenseite, jedoch ohne Klemmplatte und Schraube.

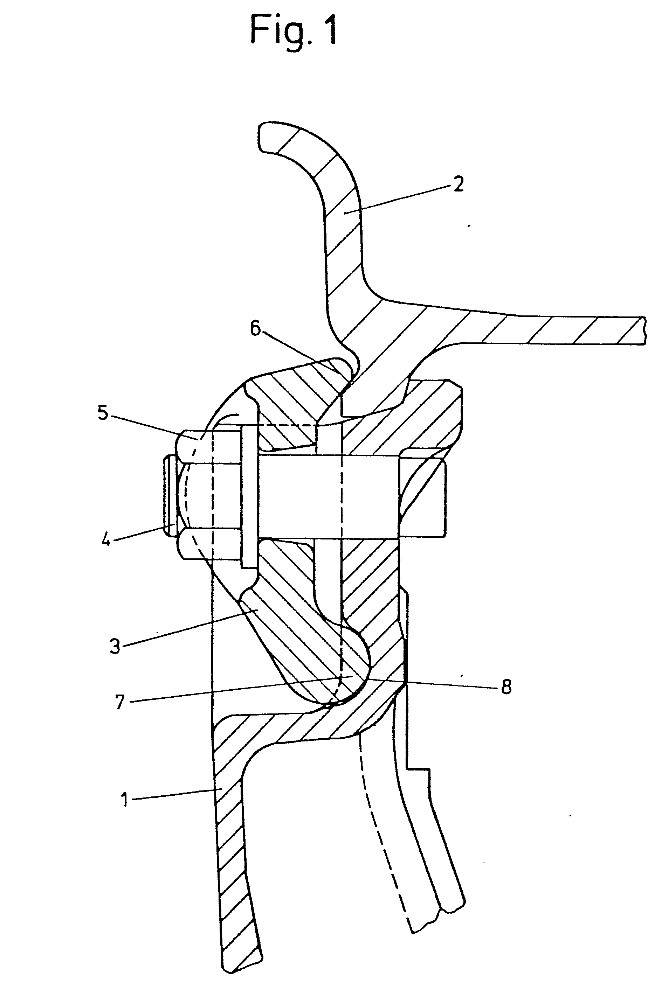

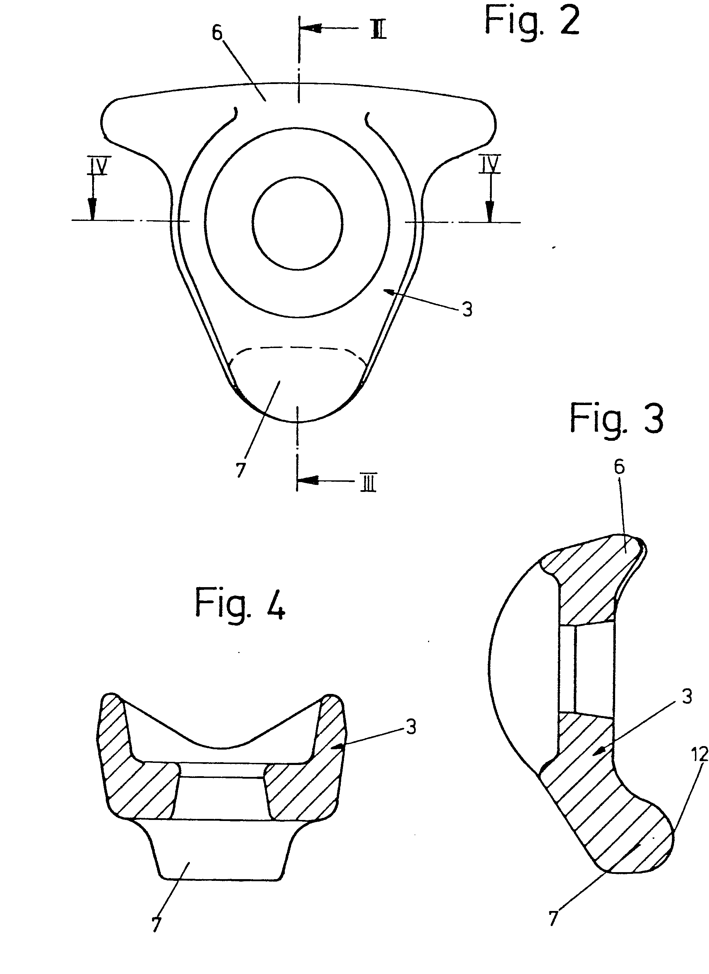

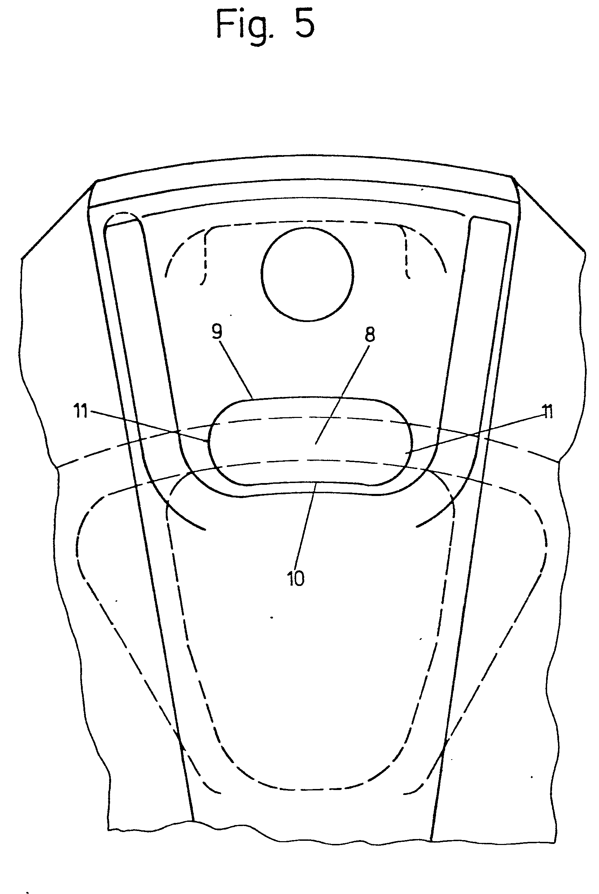

In Fig. 1 ist ein Radkörper 1, eine Felge 2, eine Klemmplatte 3,
eine Schraube 4 und eine Mutter 5 dargestellt. Die Klemmplatte 3
ist in den Fig. 2 bis 4 detailliert dargestellt, während der für
die Felgenmontage verwendete Teil des Radkörpers in Fig. 5 gezeigt ist.

Die Klemmplatte 3 ist mit zwei, der Radaussenfläche zugekehrten
Vorsprüngen 6, 7 versehen, von denen der erste 6 gegen die Felge
2 anliegt, während der zweite Vorsprung 7 in eine Ausnehmung 8
im Radkörper 1 eingreift.

Die Ausnehmung 8 ist im gezeigten Beispiel in radialen Schnittebenen teilkreisförmig ausgebildet und kann z.B. einen Radius
von 10 mm aufweisen, wobei die beiden Enden der Ausnehmung 8
ebenfalls teilkreisförmig verlaufen. Somit ist die Ausnehmung 8
etwa muldenförmig und in der Längsrichtung misst sie z.B. etwa
50 mm. Die beiden Längskanten 9 und 10 der Ausnehmung 8 verlaufen teilkreisförmig um die Achsmitte des Rades und gehen an
ihren Enden in halbkreisförmige Endkanten 11 über, so dass die
Kanten 9, 10 und 11 zusammen die Ausnehmung 8 begrenzen (Fig. 5).

Der in die Ausnehmung 8 eingreifende Vorsprung 7 (Fig. 3) ist mit
einer Bogenfläche 12 versehen, die einen etwas kleineren Radius
als die Ausnehmung 8 aufweist. Der Radius der Fläche 12 kann z.B.
9,5 mm gegenüber 10 mm für die Ausnehmung 8 bemessen. Die Länge
der Fläche 12 kann z.B. 35 mm gegenüber einer Länge der Ausnehmung 8 von z.B. 50 mm betragen.

Wenn die Klemmplatte 3 mittels der Schraube 4 und der Mutter 5
angezogen und somit der Vorsprung 7 in die Ausnehmung 8 eingepresst ist, haben diese eine relativ grosse gemeinsame Berührungsfläche, die zudem mit steigendem, auf die Mutter ausgeübten Drehmoment grösser wird. Somit kann auch eine Abnutzung der
aufeinander aufliegenden Flächen des Vorsprungs 7 und der Ausnehmung 8 auch dadurch nachkorrigiert werden, dass die Mutter 5
stärker angezogen wird. Dadurch wird eine Erhöhung der Haltefestigkeit der Klemmplatte 3 in radialer Richtung erreicht, was
bei der bekannten Ausführung deshalb nicht möglich ist, weil
dort die beiden Flächen parallel zur Achse verlaufen.

0026447

Infolge dieser Ausbildung der Ausnehmung 8 und der Fläche 12 des
Vorsprungs 7 haben die Klemmplatten 3 eine längere Lebensdauer und sind leichter und schneller zu montieren.

Zudem ist eine falsche bzw. ungenaue Montage der Klemmplatten 3
der hier beschriebenen Ausführung praktisch ausgeschlossen.

P a t e n t a n s p r ü c h e

1. Fahrzeugrad mit Klemmplatten zur Felgenbefestigung an einem
Radkörper, wobei jede Klemmplatte etwa in der Mitte ein Loch
zur Aufnahme einer vom Radkörper gehaltenen Schraube aufweist,
auf die eine Mutter auf der Radaussenseite, zum Andrücken der
Klemmplatte gegen den Radkörper und die Felge, aufgeschraubt
ist, und die Klemmplatte mit einem ersten gegen die Felge anliegenden Vorsprung und einem zweiten, in eine Ausnehmung im
Radkörper eingreifenden Vorsprung versehen ist, dadurch gekennzeichnet, dass die Ausnehmung (8) an der Radaussenfläche von
zwei teilkreisförmigen Längskanten (9, 10) um die Achsmitte
und zwei diese verbindenden Endkanten (11) begrenzt ist, und
dass der zweite Vorsprung (7) eine der Ausnehmung (8) angepassten Form aufweist.

2. Fahrzeugrad nach Anspruch 1, dadurch gekennzeichnet, dass die
Ausnehmung (8) im Radialschnitt teilkreisförmig verläuft.

3. Fahrzeugrad nach Anspruch 2, dadurch gekennzeichnet, dass die
beiden Enden der Ausnehmung (8) teilkugelförmig ausgebildet
sind.

4. Fahrzeugrad nach Anspruch 1, dadurch gekennzeichnet, dass die
Ausnehmung (8) die Form einer konzentrisch verlaufenden Nute
kongruenter Kugeln aufweist.

5. Fahrzeugrad nach Anspruch 1, dadurch gekennzeichnet, dass die
Ausnehmung (8) und der zweite Vorsprung (7) im Radialschnitt
teilkreisförmig verläuft, wobei der Radius dieses Vorsprunges
(7) geringfügig kleiner ist als derjenige der Ausnehmung (8).

6. Fahrzeugrad nach Anspruch 1, dadurch gekennzeichnet, dass sich
der zweite Vorsprung (7), in dessen Längsrichtung, sich lediglich über den von zwei Längskanten (9, 10) begrenzten Bereich
erstreckt.

# Fig. 1

2/3

Fig. 2

Fig. 3

Fig. 4

2124/FzT

# Fig. 5